# EUROPEAN PATENT APPLICATION

(11) **EP 4 528 030 A1**
(43) Date of publication of application: **26.03.2025**
(21) Application number: 23198676.1
(22) Date of filing: 21.09.2023
(51) Int. Cl.: E01C 13/08, B29B 17/00

(54) **METHOD FOR MANUFACTURING AN ELASTIC LAYER FOR AN ARTIFICIAL TURF SYSTEM ON SITE**

(71) Applicant: Polytan GmbH, 86666 Burgheim (DE)
(72) Inventor: SICK, Stephan, 76532 Baden-Baden (DE); GROCHLA, Dario, 44869 Bochum (DE); VAN DEN BERG, Thorsten, 45145 Essen (DE); SCHNEIDER, Benjamin, 85132 Schernfeld (DE); PAJAK, Michael, 47839 Krefeld (DE)
(74) Representative: Richardt Patentanwälte PartG mbB

(57) **Abstract**

A method for manufacturing an elastic layer on site provides for collecting artificial turf infill from an aged artificial turf, mixing the artificial turf infill, a binding agent, and fragments of an aged elastic layer for forming a fluid elastic composite, and applying the fluid elastic composite on a substrate at the site for forming the elastic layer.

## Description

### FIELD OF THE INVENTION

Certain embodiments of the invention relate to the field of elastic composites, such as elastic layers and methods of manufacture. More specifically, certain embodiments of the invention relate to methods of manufacturing an elastic layer on site, methods of manufacturing an artificial turf system on site, and the systems therefrom.

### BACKGROUND OF THE INVENTION

Artificial turf or artificial grass is a surface that is made up of fibers which is used to replace natural grass. The artificial turf is designed such that it has an appearance which resembles grass. Typically, artificial turf is used as a surface for sports such as soccer, American football, rugby, tennis, golf, for playing fields, or exercise fields. Furthermore, artificial turf is frequently used for landscaping applications. An advantage of using artificial turf is that it eliminates the need to care for a grass playing or landscaping surface, like regular mowing, scarifying, fertilizing and watering. For example, watering can be difficult due to regional restrictions for water usage. In other climatic zones the re-growing of grass and re-formation of a closed grass cover is slow compared to the rate of damaging the natural grass surface by playing and/or exercising on the field. Although artificial turf fields do not require similar attention and effort to be maintained, they typically exhibit wear after an intensive usage time of 5-15 years. Mechanical damage from use and exposure to UV radiation, thermal cycling, interactions with chemicals and various environmental conditions generate wear on artificial turf. It is therefore economically beneficial, as well as efficient, to replace an existing worn artificial turf system by manufacturing a new artificial turf system reusing one or more components of the existing aged artificial turf system.

US20130280445 A1 describes a system and method for recycling and repurposing a synthetic turf field cover including a pre-existing mixture of rubber and sand particles embedded in the turf material, and US2021/0189663 A1 describes a method for manufacturing an artificial turf system using a mixture of pre-existing infill and a binding agent.

### BRIEF SUMMARY OF THE INVENTION

Various embodiments provide a method for manufacturing an elastic layer on site, manufacturing an artificial turf system on site, and an artificial turf system, as described by the subject matter of the independent claims. Advantageous embodiments are described in the dependent claims. Embodiments of the present invention can be freely combined with each other if they are not mutually exclusive.

In one aspect, the invention relates to a method for manufacturing an elastic layer on site, including collecting artificial turf infill from an aged artificial turf, mixing the artificial turf infill, a binding agent, and fragments of an aged elastic layer for forming a fluid elastic composite, and applying the fluid elastic composite on a substrate at the site for forming the elastic layer. The aged elastic layer is a component of an aged artificial turf system, and the aged artificial turf system includes the aged artificial turf and/or another aged artificial turf. Elastic layers, when used, are typically positioned between an artificial turf and the substrate underneath.

Advantageously, manufacturing an elastic layer on site, also referred to as "in situ," reduces costs and logistics of transporting all components for manufacturing an elastic composite to the site, as well as eliminating the technical considerations of keeping a pre-mixed elastic composite from partially or totally solidifying before applying the mixture to the substrate, particularly when the mixture is pre-mixed off-site. Furthermore, by forming the fluid elastic composite from a mixture of a binding agent, collected aged artificial turf infill and fragments of aged elastic layer(s), components of aged artificial turfs can be recycled for forming new elastic layers (which may also serve as platforms upon which new artificial turfs can be laid), thereby reducing waste associated with aged artificial turfs and reducing costs of installing new artificial turfs, for at least the reasons that the new elastic layer may be formed from one or more components of aged artificial turfs.

In one embodiment, the artificial turf infill is thermally untreated during the collecting and during the mixing, and/or the size and shape of the artificial turf infill is unaltered during the collecting.

Advantageously, generating the fluid elastic composite from aged infill that is neither heat treated (i.e., heat is not applied to the infill upon collection nor upon mixing), nor chopped, crushed, broken apart, polished, or reshaped in any way (e.g., individual granulates of the infill are not downsized), reduces the cost, processing time and technical considerations for providing the fluid elastic composite.

In another embodiment, the artificial turf infill includes disaggregated artificial turf infill. Applying heat to collected infill may result in aggregation of some portions of the infill (e.g., individual granulates of the infill may clump together due to the solving or decomposing or partial solving or decomposing of rubber and/or plastic components (i.e., polymer components) of the infill. Advantageously, mixing a disaggregated infill with a binding agent and fragments of the aged elastic layer(s) result in a more homogeneous elastic layer, thereby providing a more stable layer, as well as providing more consistent levels of elasticity over large surface areas of the elastic layer.

In yet another embodiment, the mixing further includes mixing together the artificial turf infill, the binding agent, the fragments of the aged elastic layer, and fragments of the aged artificial turf and/or the other aged artificial turf. Advantageously, fragments of the aged artificial turf and/or the other aged artificial turf further reduce the waste associated with aged artificial turfs and further reduce costs of providing new elastic layers and new artificial turfs, for at least the reasons that the new elastic layer may be formed from one or more additional components of aged artificial turfs.

In another embodiment, the fragments of the aged artificial turf and/or the other aged artificial turf include one or more of: aged artificial turf fibers, downsized portions of aged artificial turf fibers, downsized portions of artificial turf backing layers and downsized portions of artificial turf carrier layers.

Mixing downsized portions of artificial turf backing layers and/or downsized portions of artificial turf carrier layers, and in particular aged artificial turf fibers and/or downsized portions of aged artificial turf fibers, with the collected infill and the fragments of aged elastic layers, may result in advantageous biomechanical properties of the elastic layer combined with robustness and long-term stability, especially when the elastic layer is subjected to seasonal freeze-thaw cycles.

In yet another embodiment, the method of manufacturing an elastic layer on site further includes mowing the aged artificial turf and/or the other aged artificial turf for generating the downsized portions of aged artificial turf fibers. Advantageously, providing downsized portions of aged artificial turf fibers by mowing the aged artificial turf reduces the technical complexity, cost and processing time otherwise needed to separate out the artificial turf fibers from the aged artificial turf, given that most fibers are firmly embedded in a carrier layer (and optionally a backing layer and optionally an aged elastic layer) via polymerized components and/or by the tufting or weaving of the fibers in the carrier layer and optionally in the backing layer.

In another embodiment, the aged elastic layer comprises elastic granules, such as rubber granules.

In another embodiment, the binding agent comprises polyurethane.

In another embodiment, applying the fluid elastic composite on the substrate includes pouring the elastic composite on the substrate for forming the elastic layer. In other embodiments, the fluid elastic composite is sprayed on the substrate for forming the elastic layer. Spraying a fluid elastic composite on the substrate advantageously enables full coverage of the substrate (i.e., of a surface of the substrate), including complete leveling out and coverage of any surface irregularities and any cracks, and pouring the fluid composite on the substrate enables full coverage of the substrate, including complete leveling out and coverage of any surface irregularities and any cracks, while also reducing the costs and any technical complexities associated with spraying (e.g., use of special equipment, such as spray nozzles, pressurized systems, as well as environmental considerations (e.g., windy conditions)).

In one embodiment, the substrate includes one of: soil, rock, gravel, and cement. The rock may be naturally occurring rock, either originally in place at the site, or transported and laid at the site. Gravel consists of particulates of crushed or ground rock, as known to those of skill in the art. Alternatively, the substrate may include one or more of soil, rock, gravel and cement layers, where the layers are vertically stacked one upon the other. Soil may be any earthen material that naturally occurs on site, or may be transported from other sites. For the purposes of the present disclosure, and as known to those of skill in the art, soil is defined to be a layer or a vertical sequence of layers produced by the combined actions of percolating waters and living organisms.

In another embodiment, the artificial turf infill includes rubber infill and optionally one or more of: mineral infill, including one or more mineral components, such as sand, zeolite, silicate, and aluminum silicate; inorganic infill, including one or more inorganic substances such as talcum, kaolin, calcium carbonate, magnesium carbonate, silicate, silicic acid, silicic acid ester, aluminum trihydrate, magnesium hydroxide, meta and/or polyphosphates, and coal fly ash; plastic-based infill; and plant-based infill. In one embodiment, elastic properties of the formed elastic layer may be tuned by filtering the content (e.g., amounts and types) of mineral infill in the artificial turf infill that is added during the mixing step when forming the fluid elastic composite, and/or by adding additional mineral content when mixing the artificial turf infill, the binding agent, and fragments of an aged elastic layer for forming the fluid elastic composite. In one embodiment, the rubber infill includes rubber granules, also referred to as granulates.

In another aspect, the invention relates to an artificial turf system, including the elastic layer manufactured as described above, and an artificial turf positioned directly on the elastic layer.

In another aspect, the invention relates to a method of manufacturing an artificial turf system on site, including manufacturing the elastic layer as described above, where the fluid elastic composite on the substrate solidifies into the elastic layer, and where before the fluid elastic composite completely solidifies, applying an artificial turf directly on the fluid elastic composite.

### BRIEF DESCRIPTION OF SEVERAL VIEWS OF THE DRAWINGS

The following embodiments of the invention are explained in greater detail, by way of example only, making reference to the drawings in which:
Fig. 1 shows a cross-section of an existing artificial turf and optional existing elastic layer, according to the prior art;
Fig. 2 shows a flowchart of a method of manufacturing an elastic layer on site, according to an embodiment of the present invention;
Fig. 3 shows a cross-section of the existing artificial turf of Fig. 1 after a first processing, according to an embodiment of the invention;
Fig. 4 shows a cross-section of a new elastic layer formed on a substrate, according to an embodiment of the invention;
Fig. 5 shows a cross-section of the existing artificial turf of Fig. 3 after another processing, according to an embodiment of the invention;
Fig. 6 shows a cross-section of a new artificial turf, according to an embodiment of the invention;
Fig. 7 shows a cross-section of an artificial turf system, according to an embodiment of the invention; and
Fig. 8 shows a machine for removing and processing an existing artificial turf and an optional existing elastic layer and for creating and applying an elastic layer, according to an embodiment of the invention.

### DETAILED DESCRIPTION OF THE INVENTION

Embodiments of the invention may have the advantage that existing, worn-out artificial turf can be reused, at least partially, for providing a new elastic layer, which can further be used in conjunction with a new artificial turf or with new surfaces, such as types of floorings or track surfaces, for example. The amount of waste generated upon replacing worn-out artificial turf with a new turf or new surface may be reduced. Furthermore, costs of the new artificial turf may be reduced, because the infill of existing artificial turf(s), as well as downsized portions of aged elastic layer(s) used in combination with the existing artificial turf(s), are used to provide a new elastic layer. Thus, components needed for manufacturing a new elastic layer, such as rubber granules, need not be newly manufactured and purchased in order to provide a flooring, a turf, or other surface with a defined minimum elasticity. That is, the infill of the existing, worn-out turf(s) and fragments of aged elastic layers used in conjunction with one or more existing artificial turfs are reused for generating an elastic layer that can used as a basis for the new artificial turf, or as a basis for other structures, such as stable platforms underlying athletic tracks or flooring for animal stalls, etc. Moreover, the elastic layer (also referred to as the elastic binding composite layer) may have the advantage that the elastic binding composite (EBC) layer may homogeneously distribute mechanical forces imposed by, e.g., a ball, or players of a soccer or rugby game, or players running indoor or outdoor track events. Thus, the rigidity of the EBC layer may ensure that the players are tiring less quickly.

In contrast to the artificial turf structure described in US20130280445 A1, the infill of the aged turf is not recycled for use as infill of a new artificial turf, but rather recycled for mixing with recycled fragments of aged elastic layers and optionally with further recycled components, such as other fragments of the aged turf, and with a binder to form an elastic layer (EBC layer) to be used as basis for a new artificial turf, or as a basis for other types of surfaces. This may additionally increase flexibility as to the use of aged infill, because the infill of the aged turf may have a different color or grain size than the color or grain size desired for the new artificial turf.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

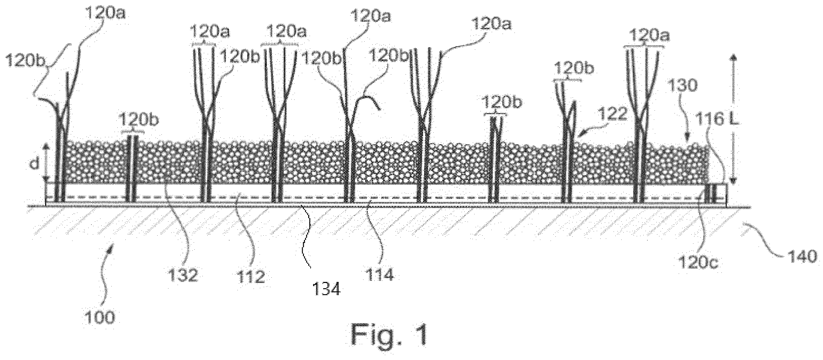

Fig. 1 shows a cross-section of an existing artificial turf 100, according to the prior art. The existing artificial turf 100, also referred to as an aged artificial turf 100, comprises artificial turf that has been previously used and/or exposed to the natural elements. For example, a recently manufactured artificial turf that is stored, but not necessarily used, is considered an aged artificial turf. The existing artificial turf 100 includes a carrier layer 112, e.g. a carrier mesh, and a backing layer 114, e.g. a latex backing or polyurethane backing, positioned on a bottom side of the carrier layer 112, where the bottom side faces towards a substrate 140. The existing artificial turf 100 also includes existing artificial turf fibers 120 that have been tufted into the carrier layer 112, as is known in the art. The backing layer 114 may serve to mechanically bind the artificial turf fibers 120. Various types of glues, coatings or adhesives could be used for the backing (i.e., coating) layer 114. The backing layer 114 may be optional. For example, the artificial turf fibers 120 may only be woven into the carrier layer 112 of the artificial turf 100.

The artificial turf fibers 120 of the existing artificial turf 100 may comprise any combination of intact fibers 120a, shown as extending a distance L above a top surface 116 of the carrier layer 112, partially intact fibers 120b comprising fibers that have been broken or damaged in some manner, and which do not extend the distance L above the top surface 116 of the carrier layer, and non-intact fibers 120c, which do not extend above the top surface 116 of the carrier layer 112.

Furthermore, the existing artificial turf 100 typically includes an infill layer 130 comprising infill 132 that is a loose collection of granulates (also referred to as granules) arranged on the top surface 116 of the carrier layer 112, thereby filling the space between lower portions 122 of the artificial turf fibers 120 to a typical depth d, as is known in the art. Conventionally, the infill 132 is a rubber infill (i.e., an elastic infill, such as rubber granulates), and may optionally include one or more of other types of infill, such as: mineral infill, including one or more mineral components, such as sand, zeolite, silicate, and aluminum silicate; inorganic infill, including one or more inorganic substances such as talcum, kaolin, calcium carbonate, magnesium carbonate, silicate, silicic acid, silicic acid ester, aluminum trihydrate, magnesium hydroxide, meta and/or polyphosphates, and coal fly ash; plastic-based infill (e.g., non-elastic infill); and plant-based infill. For example, in one embodiment the rubber infill includes rubber granulates mixed with plant-based fibers, where the fibers may be partially and/or fully attached to the rubber granulates. The infill 132 may be used to enable the artificial turf fibers 120 to stand vertically up and look like a natural grass athletic field, as well as provide cushion for players on the field. Additionally, the infill 132 may emulate the feeling of natural soil and provide a realistic bounce when sports are played on the field.

The existing artificial turf 100 optionally rests on an elastic layer 134. The optional elastic layer 134 is positioned between the artificial turf 100 and the substrate 140. A top side of the elastic layer 134 contacts a bottom side of the optional backing layer 114, and when the optional backing layer 114 is not present, then the top side of the elastic layer 134 contacts a bottom side of the carrier layer 112.

The elastic layer 134 rests on the substrate 140 referred also as the "base layer" 140, which may be soil, rock, gravel or cement, or any other type of stable platform that offers adequate support for whatever activity the existing artificial turf 100 was designed. A bottom side of the elastic layer 134 contacts a top surface of the substrate 140. The artificial turf 100 and the elastic layer 134 may be collectively referred to as an artificial turf system.

Over time and use, including exposure to the natural elements, such as UV rays, moisture, heat, thermal cycles (i.e., freezing and thawing cycles), impact from particles carried by the wind, etc., the existing artificial turf 100 exhibits signs of wear. For example, and as illustrated to some extent by Fig. 1, some of the artificial turf fibers 120 may break, tear or become punctured, become loose from the carrier layer 112 and/or the optional backing 114, or may be actual displaced or torn out of the existing artificial turf 100. In addition, the components which comprise the artificial turf fibers 120 may break down chemically, resulting in the fibers losing a collective cushioning effect, for example, or losing mechanical properties such as rigidity and flexibility.

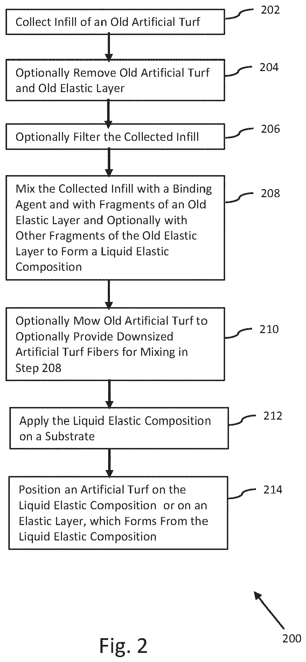

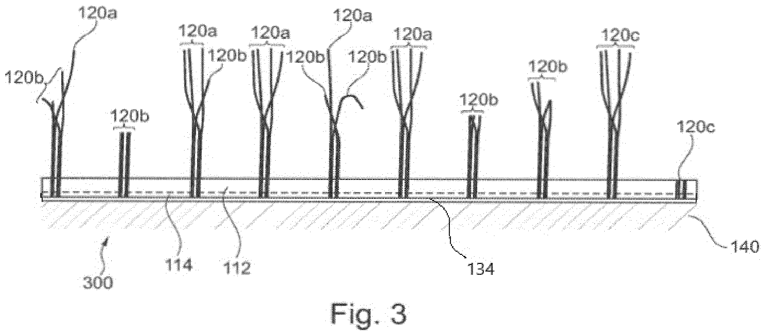

Fig. 2 illustrates a method of manufacturing 200 an elastic layer on site, according to an embodiment of the present invention. In step 202, infill of an existing (i.e., aged) artificial turf (i.e., an artificial turf that has been previously installed in the field (i.e., on site), and presumably, used, and/or another artificial turf installed at another site and/or another artificial turf stored off-site (e.g., in a warehouse or at a recycling center)) is collected. For example, a collection machine (not shown), such as an industrial vacuum operated by a person, or an automatic, robotic machine configured to collect loose particles or debris with a mechanical or vacuum intake, collects the infill 132 of the existing artificial turf 100, resulting in a first processed existing artificial turf 300, as illustrated in Fig. 3. Fig. 3 is similar to Fig. 1, having the same reference numbers for the same elements, except that the first processed existing artificial turf 300 of Fig. 3 does not have the infill 132 as illustrated in Fig. 1.

In optional step 204, the existing artificial turf 100 and the elastic layer 134 is collected (i.e., removed) by the same machine that was used for collecting the infill or by a different machine. For example, the existing artificial turf with the elastic layer can be rolled up and the rolls of used artificial turf and elastic layer may be transported e.g., to a landfill, warehouse, or recycling center. Preferably, a single machine performs the collection of the infill and the collection of the rest of the existing artificial turf concurrently. Alternatively, the machine separates the existing artificial turf 100 from the elastic layer 134, if present, and either stores (e.g., rolls up) the existing artificial turf 100 into one or more turf rolls and rolls up the elastic layer 134 int one or more elastic rolls, or further processes the separated elastic layer 134 (and optionally the artificial turf 100), such as downsizing the elastic layer 134 into fragments (e.g., shredding and/or chopping and/or cutting the elastic layer into smaller pieces (i.e., into fragments)).

In one embodiment, the collected infill (not shown) comprises rubber granulates and optionally one or more other types of infill, such as: mineral infill, including one or more mineral components, such as sand, zeolite, silicate, and aluminum silicate; inorganic infill, including one or more inorganic substances such as talcum, kaolin, calcium carbonate, magnesium carbonate, silicate, silicic acid, silicic acid ester, aluminum trihydrate, magnesium hydroxide, meta and/or polyphosphates, and coal fly ash; plastic-based infill (e.g., non-elastic infill); and plant-based infill, and in another embodiment, the collected infill comprises rubber granulates (and optionally other types of infill as described above) and loose pieces of artificial turf fibers 120 and/or loose pieces of the backing 114, or components of the backing 114, that have broken off during the life of the existing artificial turf 100.

In some embodiments, the collected rubber granulates may be styrene butadiene rubber (SBR) granulates, or sulfur-cured ethylene propylene diene monomer rubber (sulfur-cured EPDM) granulates, or a mixture of these granulates. In addition, or alternatively, the collected rubber granules can comprise rubber-coated granulates manufactured from natural fibers, in particular plant fibers such as burlap fibers, jute fibers, cotton fibers, wool fibers, hemp fibers, polyester fibers, natural fibers, flax fibers, kenaf fibers, nettle fibers, sisal fibers, coconut fibers, and combinations thereof. For instance, European Patent EP 2 206 833 A1 discloses a method for producing a particulate infill material for synthetic-grass structures, which envisages providing a mass of thermoplastic material with a filler consisting of coconut-based material and subjecting said mass of thermoplastic material with the filler consisting of coconut-based material to granulation so as to obtain the aforesaid particulate infill material. Preferentially, the thermoplastic material is in particulate form, and the coconut-based material is in particulate form (fibrous, ground and/or shredded). The mixture obtained by mixing the thermoplastic material and the coconut-based material is preferentially heated in order to bring about softening of the thermoplastic material with the corresponding formation of a matrix of thermoplastic material that incorporates the coconut-based material as filler. However, the scope of the present invention covers collected rubber granulates having all known composites and mixtures of rubber that could be used in existing artificial turf systems.

In optional step 206, the collected infill may be filtered by the collection machine, or by another machine or device, referred to as a filter machine or filter apparatus, configured to filter loose particulate, for example, to obtain a filtered collected infill (not shown) comprising substantially of the collected rubber granulates. Alternatively, the filter machine or filter apparatus is configured to filter loose particulate, for example, to obtain a filtered collected infill (not shown) comprising substantially of the collected rubber granulates and one or more other types of infill, such as: mineral infill, including one or more mineral components, such as sand, zeolite, silicate, and aluminum silicate; inorganic infill, including one or more inorganic substances such as talcum, kaolin, calcium carbonate, magnesium carbonate, silicate, silicic acid, silicic acid ester, aluminum trihydrate, magnesium hydroxide, meta and/or polyphosphates, and coal fly ash; plastic-based infill (e.g., non-elastic infill); and plant-based infill. In other embodiments, the collected infill is separated into different components, such as rubber granulates and sand. Rubber infill may form a performance layer and sand infill may form a stabilization layer, as is known in the art.

For example, components of infill may be separated from one another (e.g., rubber infill may be separated from sand infill) by any of the known conventional means, such as separating the fractions based on specific gravity to provide low density and high density fractions. Such conventional means include using water and/or air flow, or other mechanical means, such as one or more meshes of different sizes, to separate out the fractions, based on density and/or weight and/or size. Patent Publication No. US 2016/0067745 A1 to Andersen et al. describes some of these separation means.

Optional step 206 may optionally include embodiments in which the collected infill is filter and washed, or only washed, such that any aggregated infill is broken up into disaggregated components (via the mechanical processes of filtering and washing), thereby providing a substantially disaggregated collected infill (also referred to as a processed collected infill), which is then mixed with the binding agent and fragments of an aged elastic layer for providing a fluid elastic composite, as described below in conjunction with step 208.

Optional step 206 may also optionally include embodiments in which the collected infill is dried to reduce the water content, particularly when the collected infill is washed. Commercially-available dryers, which are well known in the art, may be used to dry the collected infill. When the collected infill is water-free, or at least has a known water content that is below a predefined maximum level, the fluid elastic composite that is formed in step 208, to be discussed further below, may rapidly set (i.e., cure) without extensive foaming for providing a higher quality elastic layer.

In some embodiments, original grain (i.e., particle) sizes of infill of artificial turfs is approximately 0.5 - 2.5 mm, which may result in the grain sizes of collected infill from used artificial turfs being in the range of approximately 0.1 microns - 10 mm, where the smaller-sized particles result from the abrasive action on the infill (i.e., wearing down and griding away of the particles due to frictional forces), and the larger-sized particles result from aggregation (i.e., clumping) and/or compaction. Frictional forces, as well as compaction forces, can be created by the direct contact of shoes of persons using artificial turf fields, as well as the impact of bodies and sports equipment of persons using the artificial turf fields, with the infill.

Additionally, the collection machine may be configured to additionally process the collected rubber granulates by, for example, reducing the size of and/or shaping the collected rubber granulates into spherically-shaped collected rubber granulates having diameters of 0.1 - 2.5 mm, preferably diameters of approximately 0.5 - 2.5 mm, and more preferably diameters of approximately 1.0 -2.5 mm.

In step 208, the collected infill, unfiltered in one embodiment and filtered in another embodiment, is mixed with a binding agent and with fragments of an existing elastic layer (i.e., an aged elastic layer) for forming a fluid elastic composite. In some embodiments, the collected infill is filtered to contain only performance layer infill, or at least a substantial fraction of performance layer infill (e.g., over 90 wt. %, and preferably over 95 wt. % performance infill).

In one embodiment, the elastic layer 134, which was separated from the existing artificial turf 100 collected from the site (or from another site) in optional step 204, is downsized by the machine used to collect the artificial turf 100 for generating the fragments of the existing elastic layer. In another embodiment, the fragments of other aged elastic layers (previously used in combination with other aged artificial turfs) are generated by downsize machinery located at recycling centers and/or warehouses, and are then transported to the site for mixing with the collected infill and the binding agent.

Additionally, the collected infill, if not collected from an existing artificial turf on site (which is subsequently removed (i.e., collected)), is collected from other aged artificial turfs at other sites or at recycling centers and/or warehouses, and then transported to the site for mixing with the binding agent and fragments of aged elastic layer(s), on site. In other embodiments, rubber dust particles, such as SBR dust particles collected from the manufacture of tires and/or from the residual production of bitumen in the heat-refining of natural substances, such as petroleum, are aggregated (e.g., pressed) into granules, and then mixing with collected infill, the binding agent and fragments of aged elastic layer(s), on site, for forming the fluid elastic composite.

In one embodiment, the aged elastic layer 134 of artificial turf 100 (or elastic layers of other artificial turfs, not shown) include polymer granules, and in yet another embodiment, the polymer granules of the aged elastic layer include elastic granules.

In some embodiments, the artificial turf infill is thermally untreated during the collecting in step 202. In other embodiments, the artificial turf infill is thermally untreated during the collecting in step 202 and the optional filtering in step 206, and in yet other embodiments, the artificial turf infill is thermally untreated during the collecting in step 202, the optional filtering in step 206, and the mixing in step 208. Within the meaning of the present disclosure, thermally untreated means that heat is not applied to the infill. As known to those of skill, application of heat to infill may result in at least portions of the infill becoming aggregated (i.e., clumped together), due to the solving or decomposing or partial solving or decomposing of rubber-based and/or some plastic-based infill, as well as the melting or partial melting or solving or decomposing of foreign matter that may be present in the infill, such as loose pieces of artificial turf fibers and/or loose pieces of the backing layer and/or loose pieces of the carrier layer, that have broken off during use of the existing artificial turf 100 over its lifetime.

In other embodiments, the size and shape of the artificial turf infill is unaltered during collection of the artificial turf infill in step 202. In another embodiment, the size and shape of the artificial turf infill is unaltered during collection of the artificial turf infill in step 202 and during the optional filtering of the infill in step 206. Although the optional filtering step 206 may, in some embodiments, filter the infill based upon average sizes of the particulate matter that compose the infill, filtering the infill does not change the size, nor shape, of the resulting filtered product, according to an embodiment of the present disclosure.

Referring back to step 208, in other embodiments the collected infill, unfiltered in one embodiment and filtered in another embodiment, is mixed with the binding agent and with the fragments of an existing elastic layer (i.e., the aged elastic layer on site, if present and/or aged elastic layers corresponding to other aged artificial turfs off site) and with fragments of the aged artificial turf on site and/or other aged artificial turf(s) off site.

According to yet another embodiment, fragments of the aged artificial turf and/or the other aged artificial turf(s) include one or more of: aged artificial turf fibers, downsized portions of aged artificial turf fibers, downsized portions of aged artificial turf backing layers and downsized portions of aged artificial turf carrier layers.

In one embodiment, the aged artificial turf 100, and optionally the aged elastic layer 134 used with aged artificial turf, if present, which are removed in step 204, and/or other aged artificial turfs and other corresponding aged elastic layers, are processed (i.e., mechanically and/or chemically disintegrated), either on site or at other locations, for example, at warehouses or processing centers. For example, the existing artificial turf(s) can be chopped, shredded, torn apart, cut, or the like. Thereby, downsized portions (e.g., fragments) of the fibers of the existing artificial turf(s) are generated. In addition, or alternatively, downsized portions (e.g., fragments) of other sections of worn out artificial turfs, such as fragments derived from the aged carrier layer, aged backing layer and optionally fragments from the aged elastic layer, can be generated. One or more of these generated fragments can then be provided for mixing with the collected infill, the binding agent, and the fragments of aged elastic layer(s) in step 208 for forming the fluid elastic composite.

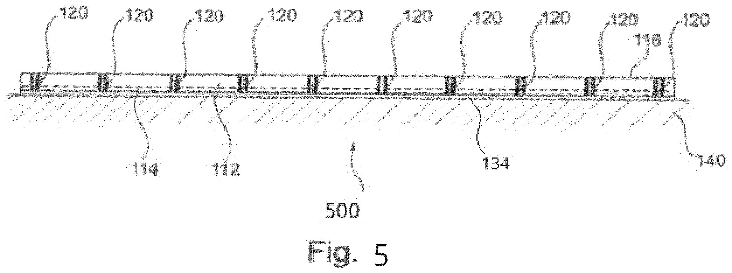

In optional step 210, the aged artificial turf and/or the other aged artificial turf(s) is mowed for generating the downsized portions of aged artificial turf fibers, which are then mixed in step 208 with the collected infill, the binding agent and the fragments of existing elastic layer(s), and optionally and additionally with fragments of the aged artificial turf and/or other aged artificial turf(s). A cutting machine may be used to mow (i.e., cut or downsize) the aged artificial turf fibers of the aged artificial turf and/or the other aged artificial turf(s), and in some embodiments, mow and collect the artificial turf fibers, as discussed further below in conjunction with Fig. 5.

In one embodiment, the binding agent is fluid polyurethane, and thus the elastic composite may be a polyurethane fluid comprising a suspension of the infill of the aged artificial turf, e.g., a suspension of styrene-butadiene granules or of sulfur-cured ethylene propylene diene monomer (EPDM)granules, that solidifies into an elastic layer. In other embodiments, the binding agent may be a mixture of polyols and Poly isocyanates that solidify into polyurethane, or any other kind of fluid that is capable of solidifying after a pre-defined setting (or hardening) time into a solid layer or film. In some embodiments, the binding agent is mixed in step 208 not only with the collected infill of the aged artificial turf, and the fragments of the aged elastic layer, and optionally with fragments of the aged artificial turf and/or the other aged artificial turf, but also with sand and/or additional rubber granules, e.g., SBR or EPDM granules, and/or with rubber-coated granulates made of plant fibers.

The fluid (i.e., the fluid elastic composite) may solidify into a film by a drying process or by a chemical reaction resulting in a solidification of the fluid. Such a chemical reaction can be, for example, a polymerization.

In another embodiment of the invention, the collection machine, either with or without the above-mentioned filtering apparatus for filtering the infill in optional step 206, or a separate mixing apparatus or mixing machine, is configured to mix the unfiltered or filtered collected infill with the binding agent and with the fragments of an aged elastic layer, and optional with fragments of the aged artificial turf and/or with fragments of another worn-out (i.e., aged) artificial turf for generating the fluid elastic composite.

In step 212, the fluid elastic composite is applied to a top surface of a substrate, such as to a top surface of substrate 140 at a site, after the existing artificial turf 100 and elastic layer (if present) is removed in optional step 204, or to a top surface of another substrate at a different site (not shown), for forming the elastic layer on site. In some embodiments, the substrate includes one of: soil, rock, gravel, and cement. The substate may include any stable platform known to one of skill in the art.

In another embodiment, only the existing artificial turf 100 is removed from the site in step 204, and subsequently the fluid elastic composite is applied to a top surface of the existing (i.e., aged) elastic layer 134 in step 212.

In yet another embodiment, the fluid elastic composite is applied by pouring the fluid elastic composite over a top surface of a substrate on site, such as the top surface of the substrate 140 from which the existing artificial turf 100 and the existing elastic layer 134 was removed.

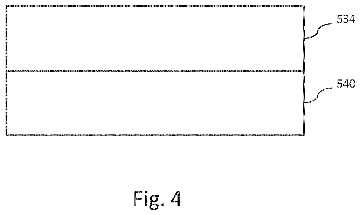

In another embodiment, Fig. 4 illustrates another site having a substrate 540. The fluid elastic composite is applied to a top surface of the substrate 540, thereby forming an elastic layer 534. The substrate 540 may be any stable platform, such as soil, rock, gravel, cement, or in another embodiment, an existing (i.e., aged) elastic layer corresponding to an aged, removed artificial turf (not shown).

Referring back to optional step 210, Fig. 5 shows a cross-section of the existing artificial turf of Fig. 3 after a further processing. As illustrated, the artificial turf fibers 120 have been mowed (i.e., cut) to be level with the top surface 116 of the carrier layer 112. In one embodiment, a cutting machine or the collection machine, either with or without the above-mentioned filtering apparatus, is further configured to cut any existing artificial turf fibers, or portions of artificial turf fibers, extending above the top surface 116 of the carry layer 112, after the infill is first collected in step 202.

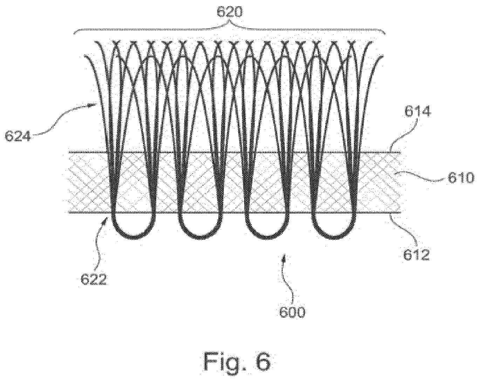

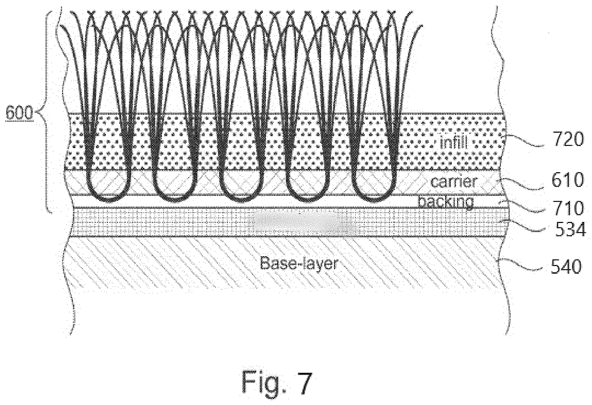

In step 214, an artificial turf 600 (see Fig. 6), also referred to as a new artificial turf 600, is positioned directly on the elastic layer 534, resulting in the artificial turf system 700 illustrated in Fig. 7, according to an embodiment of the invention.

Fig. 6 illustrates an exemplary embodiment of a section of new artificial turf 600. New artificial turf 600 comprises a carrier mesh 610 and new artificial turf fibers 620. In one embodiment, the new artificial turf fibers 620 are arranged in the carrier mesh 610, e.g., a textile plane, by means of tufting. Tufting is a type of textile weaving in which an artificial turf fiber (that may be a monofilament or a bundle of multiple monofilaments) is inserted on a carrier mesh. After the inserting is done, as depicted in Fig. 6, first parts 622 of the artificial turf fibers 620 are exposed to a bottom side 612 of the carrier mesh 610 and second parts 624 of the artificial turf fibers 620 are exposed to a top side 614 of the carrier mesh 610. Preferably, the new artificial turf further comprises a backing (not shown). After its installation, a filler is preferably added to the new artificial turf and the new, completely installed artificial turf comprises a fill layer (not shown).

Referring to step 214 in conjunction with Fig. 7, and according to some embodiments, the new artificial turf 600 is applied on the elastic layer 534 after the fluid elastic composite solidifies into the elastic layer 534. This may have the advantage that the application of the new artificial turf is facilitated as the machine or person applying the new artificial turf can move over the hardened EBC layer.

According to some other embodiments, the new artificial turf 600 is applied on the fluid elastic composite before the fluid elastic composite has completely solidified into the elastic layer 534. This may have the advantage that the lower side of the new artificial turf gets in contact with the not-yet solidified elastic layer (i.e., the fluid elastic composite) and the fluid elastic composite may penetrate the backing and the carrier structure of the new artificial turf. Thus, portions of the elastic layer 534 may incorporate portions of the new artificial turf 600 and thus firmly fix the new artificial turf upon hardening.

This may increase the stability of the generated flooring because the fluid elastic composite may contact and wet the lower side of the new artificial turf and thus mechanically fix the new artificial turf upon hardening. The combination of the fixation of the first parts 622 of the artificial turf fibers 620 in the hardened elastic composite and the fixation of middle parts 626 of the artificial turf fibers 620 in the carrier mesh 610 provide for further strong support of the new artificial turf fibers 620 in the artificial turf system 700.

As illustrated by Fig. 7, the artificial turf system 700 comprises the new artificial turf 600 that was installed on top of the elastic layer 534. The elastic layer 534 is made from a binder, e.g., a PU binder, that was mixed with collected aged infill and fragments of an elastic layer of an existing (e.g., worn-out) artificial turf. For example, the infill can be collected from an existing, worn-out artificial turf that was previously installed on the substrate 140 and that was later removed, e.g. after or while collecting the infill of the existing, aged artificial turf. It is also possible that the infill used for generating the elastic layer 534 was collected from a worn-out artificial turf at a different site. The new artificial 600 comprises a carrier layer 610, e.g. a carrier mesh, and a backing 710, e.g. a latex backing or polyurethane backing, positioned on a bottom side of the carrier layer 610, where the bottom side faces towards the substrate 540.

The new artificial turf 600 comprises artificial turf fibers that have been tufted or otherwise integrated into the carrier 610 as known in the art. The backing 710 may serve to mechanically bind the artificial turf fibers. Various types of glues, coatings or adhesives could be used for the backing, e.g. latex or PU, and the backing 710 may be optional. Using a backing may be beneficial, as it may increase elasticity of the artificial turf system 700.

Furthermore, the new artificial turf 600 typically includes an optional infill layer 720 comprising infill that is a loose collection of granulates arranged on the top surface of the carrier layer 610, thereby filling the space between lower portions of the artificial turf fibers to a typical depth, as in known in the art. Conventionally, the infill is a rubber infill. The infill may be used to enable the artificial turf fibers to stand vertically up and look like a natural grass athletic field, as well as provide cushion for players on the field. Additionally, the infill may emulate the feeling of natural soil and provide a realistic bounce when sports are played on the field.

The new artificial turf 600 of the artificial turf system depicted in Fig. 7 directly rests on the elastic layer 534 which directly rests on the substrate 540, e.g., soil, rock, gravel, cement or any other type of stable platform that offers adequate support for whatever activity the new artificial turf 600 was designed.

In preferred embodiments, a person lays, or a machine is configured to lay, the new artificial turf 600 over the substrate 540 from which the aged, artificial turf was removed after the aged infill was collected, or more specifically, over a top surface of the elastic layer 534 applied on a top surface of the substrate 540.

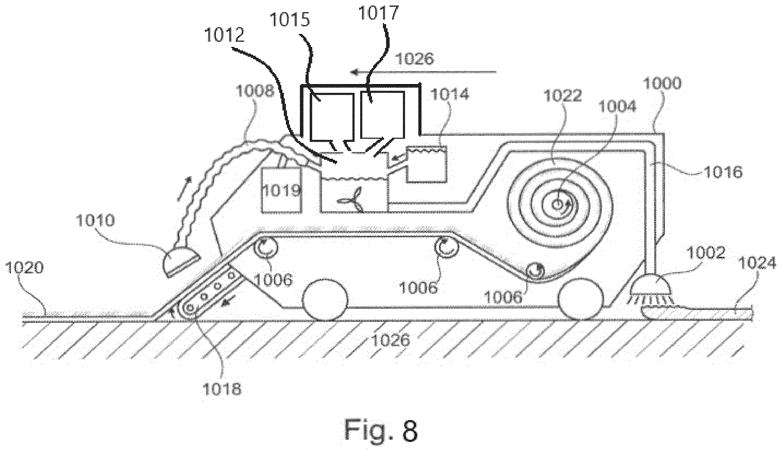

Figure 8 shows a machine 1000 for deconstructing an existing, worn-out artificial turf 1020 and for creating an elastic layer 1024.

The machine may move in the direction indicated by arrow 1026. It comprises a first intake system 1018 having e.g., the form of a plane conveyor belt, that collects the aged artificial turf and optionally the aged elastic layer that is operatively connected to one or more rotating godets 1006 which transport the collected artificial turf and optionally the aged elastic layer onto a spool or bobbin 1004. Thus, a roll 1022 of worn-out artificial turf and optionally the aged elastic layer is generated that can be transported to a landfill.

The machine 1000 further comprises a second intake system 1010 configured to collect infill from an existing artificial turf. For example, the second intake system can be an aspirator that sucks the infill particles, e.g., rubber granules, from the worn-out artificial turf while it is collected by the first intake system 1018. An example of an infill intake system is described e.g., in US20130280445 A1.

The aspirated infill particles are transported via a duct 1008 to a container 1012 used for mixing the collected infill with a binder, e.g., a one component or two-component polyurethane reaction mixture and with fragments of an aged elastic layer and optionally with fragments of an aged artificial turf. The binder can be stored in a tank 1014 connected to the container 1012 via a duct with a valve that allows a continuous adding of a defined amount if the binder. The fragments of an aged elastic layer can be stored in a tank 1015 connected to the container 1012 via a duct with a valve that allows a continuous adding of a defined amount of the aged elastic layer fragments and the fragments of an aged artificial turf can be stored in a tank 1017 connected to the container 1012 via a duct with a valve that allows a continuous adding of a defined amount of the aged artificial turf fragments. The container 1012 may comprise a stirrer or a similar device for homogeneously mixing the collected infill, the binder, the fragments of the aged elastic layer, and any additional substances to be included in the mixture that is generated in the container 1012 and that is to be used as the fluid elastic composite. The container 1012 with the stirrer and the connected one or more tanks 1014, 1015, 1017 and ducts 1008 provide a mixing system configured to mix the collected infill and the binding agent and the fragments for generating the fluid elastic composite. The fluid composite is transported via a further duct 1016 to an application system 1002 configured to apply the fluid elastic composite over the substrate 1026 for preparing the substrate to receive a new artificial turf. For example, the application system 1002 can be a nozzle 1002 that applies (e.g., pours or sprays) and optionally levels the elastic binding composite on the substrate 1026.

The vehicle 1000 can optionally comprise a cleaning unit 1019 that cleans the collected infill from debris before the cleaned infill is added to the container 1012.

According to embodiments of the present invention, infill may include polymer infill (i.e., infill made from one or more polymer materials) or organic infill (i.e., infill made from one or more organic materials), and combinations thereof. For example, poly infill may include PU coated fiber or PU encapsulated SBR granulate, sulfur and/or peroxidic cured EPDM, SBR (e.g., car tires), SBR/NBR (e.g., truck tires), TPE (thermoplastic elastomers, e.g., block copolymers such as styrene butadiene styrene SBS or styrene ethylene styrene butadiene) and/or TPV (i.e., vulcanized thermoplastics). Organic infill may include, e.g., olive pits, hemp and/or burlap, and may also be referred to as plant-based infill.

Due to usage of artificial turfs, and particularly as a result of the frictional and/or compressional forces created when players run over artificial turf fields, a fraction of the infill particles can aggregate over time. In a preferred embodiment, the artificial turf infill used in embodiments of the present invention is composed substantially of disaggregated artificial turf infill (e.g., approximately 100 wt. % disaggregated infill, or approximately 95 - 99 wt. % disaggregated infill, or over approximately 90 wt. % disaggregated infill). In one embodiment, the collected infill is filtered and/or washed such that any aggregated infill is either filtered out or broken up, thereby providing a substantially disaggregated processed collected infill, which is then mixed with the binding agent and fragments of an aged elastic layer for providing the fluid elastic composite.

In addition, and as a result mainly from the frictional forces created when players run over artificial turf fields, the infill, which contained originally-sized infill particles, can be broken down into smaller particles, e.g., into particles smaller than approximately 0.1 mm, defined with respect to embodiments of the present invention as as small particles. In preferred embodiments of the present invention, the collected infill that is mixed together with the binding agent and fragments of an aged elastic layer (for forming the fluid elastic composite) does not contain small particles, or at least does not contain a substantial amount of small particles (e.g., in some embodiments, less then approximately 10 wt. %, 5 wt. % or 3 wt. % of the collected infill used in the mixing step contains particles smaller than about 0.1 mm). In other embodiments, approximately 2-3 wt. % of the collected infill used in the mixing step contains particles smaller than about 0.1 mm. Small particles (less than approximately 0.1 mm) requires more binding agent per unit volume of the particle as compared to particles of larger size. In addition, substantial amounts of small particles in the mixture, and thus in the elastic layer formed from the mixture, reduce water permeability of the elastic layer. A water permeable elastic layer is preferred such that water can be more effectively drained from the sports field into the underlying substate (e.g., the ground). Furthermore, substantial amounts of small particles in the mixture can adversely affect the viscosity/flow properties of the binding agent, and thus the viscosity/flow properties of the fluid elastic composite mixture (e.g., adversely increasing the viscosity), as well as advancing or triggering undesirable compaction processes in which finer fraction of the particles are sandwiched between coarser fractions of the particles, thereby reducing the overall elasticity of the elastic layer.

In some embodiments, the small particles, or at least a substantial amount of the small particles (e.g., over approximately 90 wt. %) are removed from the collected infill via filtering the collected infill (e.g., filtering via a system of one or more meshes having one or more different mesh size openings), as performed in optional step 206 described above, and optionally in addition, step 206 includes pressing the filtered collected infill, resulting in the aggregation of any remaining small particles into larger particles (referred to as small particle aggregates). The filtered collected infill, including small particle aggregates that are preferably larger than approximately 0.1 mm, is then mixed with the binding agent and fragments of an aged elastic layer in step 208 for forming the fluid elastic composite. Industrial presses, such as compaction presses known in the art, may be operated at corresponding predefined pressures, predefined time durations (and optionally corresponding predefined temperatures), such that only infill smaller than 0.1mm is aggregated into larger particles (into the small particle aggregates, i.e., aggregates composed of small particles, where the small particles aggregates are preferably larger than approximately 0.1 mm). In another embodiment, the pressed filtered collected infill is additionally filtered for removing any remaining infill, including any aggregated infill formed by the pressing process, that is smaller than approximately 0.1 mm.

Some fraction of the infill particles, that were broken down into small particles via frictional forces created via usage of the artificial turf sports field as described above, may have become aggregated, as a result of, e.g., compressional forces generated from players using the artificial turf sports field. In some embodiments, the aggregated material consisting of an aggregation of small particles are not filtered out of the collected infill, but instead are mixed with the binding agent and fragments of an aged elastic layer for forming the fluid elastic composite. Even though the small particles are not preferred to be a part of the fluid elastic composite binder mixture, including these small particles in the mixture provides a pathway for recycling the small particles, in contrast to dumping the small particles, which may also include microplastics adhering to the surfaces of the small particles, into landfills.

In other embodiments, the collected infill, optionally filtered and/or washed, is used as a component in other liquid elastic composites (e.g., mixed together with a binding agent and fragments of aged elastic layers, as described in the present embodiments) for forming, preferably on site and in situ, other additional elastic layers (e.g., one or more additional elastic layers below the elastic layer 534 and/or the substrate 540 forming a sub-substrate layer (not shown) (also referred to as a subbase layer) and/or one or more additional elastic layers above the elastic layer 534, which forms other elastic layers (not shown) of the artificial turf (e.g., artificial turf 600)).

In other embodiments, elastic properties of the formed elastic layer may be tuned by filtering the content (e.g., amounts and types) of mineral infill in the artificial turf infill that is added during the mixing steps described in the above embodiments when forming the fluid elastic composite, and/or by adding additional mineral content when mixing the artificial turf infill, the binding agent, and fragments of an aged elastic layer for forming the fluid elastic composite.

Embodiments of the present invention address the ban after 2028, by the ECHA (European Chemical Agency), of microplastics, both primary microplastics (i.e., specifically manufactured for use as a microplastic) and secondary microplastics (i.e., plastics which break down into microplastics and contaminate the environment, such as the microplastics contaminating the infill of used artificial turfs). Microplastics are becoming a major environmental crisis, polluting the soil and oceans, and contaminating the food chain. Embodiments of the present invention mitigate the amount of microplastic waste contaminating the environment, from both a health perspective and a legal prospective, by recycling and immobilizing the waste as components of new, useful products.

## Claims

1. A method of manufacturing an elastic layer (534) on site, comprising:
collecting (202) artificial turf infill (132) from an aged artificial turf (100);
mixing (208) the artificial turf infill, a binding agent, and fragments of an aged elastic layer for forming a fluid elastic composite, the aged elastic layer being a component of an aged artificial turf system, the aged artificial turf system comprising the aged artificial turf or another aged artificial turf; and
applying (212) the fluid elastic composite on a substrate (540) at the site for forming the elastic layer.

2. The method of claim 1, wherein the artificial turf infill is thermally untreated during the collecting and during the mixing.

3. The method of claims 1 or 2, wherein the artificial turf infill comprises disaggregated artificial turf infill.

4. The method of any one of the previous claims, wherein size and shape of the artificial turf infill is unaltered during the collecting.

5. The method of any one of the previous claims, wherein the mixing further comprises mixing the artificial turf infill, the binding agent, the fragments of the aged elastic layer, and fragments of the aged artificial turf and/or the other aged artificial turf.

6. The method of claim 5, wherein the fragments of the aged elastic layer comprise downsized portions of the aged elastic layer, and wherein the fragments of the aged artificial turf and/or the other aged artificial turf comprise one or more of: aged artificial turf fibers (120), downsized portions of aged artificial turf fibers, downsized portions of artificial turf backing layers and downsized portions of artificial turf carrier layers.

7. The method of claim 6, further comprising mowing the aged artificial turf and/or the other aged artificial turf for generating the downsized portions of aged artificial turf fibers.

8. The method of any one of the previous claims, wherein the aged elastic layer comprises elastic granules.

9. The method of any one of the previous claims, wherein the binding agent comprises polyurethane.

10. The method of any one of the previous claims, wherein applying the elastic composite on the substrate comprises pouring the elastic composite on the substrate for forming the elastic layer.

11. The method of any one of the previous claims, wherein the substrate comprises one of: soil, rock, gravel and cement.

12. The method of any one of the previous claims, wherein the artificial turf infill comprises rubber infill and optionally one or more of: sand infill, zeolite infill, plastic-based infill, and organic infill.

13. The method of claim 12, wherein the rubber infill comprises rubber granules.

14. The method of claim 1, wherein the collected artificial turf comprise particles, and wherein the method further comprises:
filtering (206) the collected artificial turf infill for removing small particles, the small particles being smaller than 0.1 mm; and
pressing the filtered collected infill for aggregating any remaining small particles into aggregates, wherein
mixing the artificial turf infill, the binding agent, and the fragments of the aged elastic layer comprises mixing the pressed filtered collected infill, the binding agent, and the fragments of the aged elastic layer for forming the fluid elastic composite.

15. The method of claim 14, wherein the aggregates are larger than 0.1 mm.

16. An artificial turf system, comprising:
the elastic layer (534) manufactured according to any one of claims 1-15; and
an artificial turf (600) positioned directly on the elastic layer.

17. A method of manufacturing an artificial turf system on site, comprising:
manufacturing the elastic layer (534) according to any one of claims 1-15, wherein the fluid elastic composite on the substrate solidifies into the elastic layer; and
before the fluid elastic composite completely solidifies, applying an artificial turf (600) directly on the fluid elastic composite.

## Amended claims

### Amended claims in accordance with Rule 137(2) EPC.

1. A method of manufacturing an elastic layer (534) on site, comprising:
collecting (202) artificial turf infill (132) from an aged artificial turf (100);
filtering (206) the collected artificial turf infill for removing small particles, the small particles being smaller than 0.1 mm;
pressing the filtered collected infill for aggregating any remaining small particles into aggregates;
mixing (208) the pressed filtered collected infill, a binding agent, and fragments of an aged elastic layer for forming a fluid elastic composite, the aged elastic layer being a component of the aged artificial turf or another aged artificial turf; and
applying (212) the fluid elastic composite on a substrate (540) at the site for forming the elastic layer.

2. The method of claim 1, wherein the artificial turf infill is thermally untreated during the collecting and during the mixing.

3. The method of claims 1 or 2, wherein the artificial turf infill comprises disaggregated artificial turf infill.

4. The method of any one of the previous claims, wherein size and shape of the artificial turf infill is unaltered during the collecting.

5. The method of any one of the previous claims, wherein the mixing further comprises mixing the pressed filter collected infill, the binding agent, the fragments of the aged elastic layer, and fragments of the aged artificial turf and/or the other aged artificial turf, wherein the fragments of the aged elastic layer comprise downsized portions of the aged elastic layer, and wherein the fragments of the aged artificial turf and/or the other aged artificial turf consist of one or more of: aged artificial turf fibers (120), downsized portions of aged artificial turf fibers, downsized portions of artificial turf backing layers and downsized portions of artificial turf carrier layers.

6. The method of claim 5, further comprising mowing the aged artificial turf and/or the other aged artificial turf for generating the downsized portions of aged artificial turf fibers.

7. The method of any one of the previous claims, wherein the aged elastic layer comprises elastic granules.

8. The method of any one of the previous claims, wherein the binding agent comprises polyurethane.

9. The method of any one of the previous claims, wherein applying the elastic composite on the substrate comprises pouring the elastic composite on the substrate for forming the elastic layer.

10. The method of any one of the previous claims, wherein the substrate comprises one of: soil, rock, gravel and cement.

11. The method of any one of the previous claims, wherein the artificial turf infill comprises rubber infill and optionally one or more of: sand infill, zeolite infill, plastic-based infill, and organic infill.

12. The method of claim 11, wherein the rubber infill comprises rubber granules.

13. The method of claim 1, wherein the aggregates are larger than 0.1 mm.

14. An artificial turf system, comprising:
the elastic layer (534) manufactured according to any one of claims 1-13; and
an artificial turf (600) positioned directly on the elastic layer.

15. A method of manufacturing an artificial turf system on site, comprising:
manufacturing the elastic layer (534) according to any one of claims 1-13, wherein the fluid elastic composite on the substrate solidifies into the elastic layer; and
before the fluid elastic composite completely solidifies, applying an artificial turf (600) directly on the fluid elastic composite.
